Europäisches Patentamt

European Patent Office

Office européen des brevets

(19)

(11) **EP 0 704 689 B1**

(12) **EUROPÄISCHE PATENTSCHRIFT**

(45) Veröffentlichungstag und Bekanntmachung des
Hinweises auf die Patenterteilung:
**16.04.2003  Patentblatt 2003/16**

(51) Int Cl.$^7$: **G01M 1/10**, G01M 15/00

(21) Anmeldenummer: **95890165.4**

(22) Anmeldetag: **21.09.1995**

(54) **Verfahren zur Trägheitsmomentbestimmung**

Procedure for determining the moment of inertia

Procédé de détermination du moment d'inertie

(84) Benannte Vertragsstaaten:
**DE FR IT**

(30) Priorität: **30.09.1994  AT  186394**

(43) Veröffentlichungstag der Anmeldung:
**03.04.1996  Patentblatt 1996/14**

(73) Patentinhaber: **AVL List GmbH**
**8020 Graz (AT)**

(72) Erfinder:
• **Abler, Georg, Dipl.-Ing.**
**A-8052 Graz (AT)**

• **Eitzinger, Johann, Dipl.-Ing.**
**A-8020 Graz (AT)**
• **Harms, Klaus-Christoph, Dr.**
**A-8051 Graz (AT)**

(74) Vertreter: **Pinter, Rudolf, Dipl.-Ing. et al**
**Patentanwälte**
**Klein, Pinter & Laminger OEG**
**Prinz-Eugen-Strasse 70**
**1040 Wien (AT)**

(56) Entgegenhaltungen:
**EP-A- 0 077 865        EP-A- 0 465 731**
**EP-A- 0 608 676        GB-A- 2 264 472**
**US-A- 3 905 223**

**Beschreibung**

Die Erfindung betrifft ein Verfahren zur Bestimmung des Trägheitsmomentes zumindest eines Elementes eines Antriebsstranges eines Fahrzeuges, insbesonders eines Verbrennungsmotors auf einem Prüfstand, wobei das sich äußernde Drehmoment $M_M$ um das gerade wirksame Verlustmoment $M_V$ zu $M = M_M + M_V$ korrigiert und aus dem korrigierten Drehmoment M und der Drehbeschleunigung $\dot{n}$, bzw. äquivalenten Größen, das Trägheitsmoment $I = M \cdot (30/\pi\dot{n})$ bestimmt wird.

Der exakte Wert des Trägheitsmomentes ist im genannten Zusammenhang ein wichtiger, häufig aber nur unzulänglich bekannter Parameter. Seine Bestimmung hat insbesondere im Zusammenhang mit Verbrennungsmotoren als Fahrzeugantrieb eine relativ große Bedeutung für Forschung und Entwicklung, aber auch z.B. für Fehlerdiagnose und Wartung. Darüberhinaus ist in verschiedenen Zusammenhängen beispielsweise auch das Trägheitsmoment eines Getriebes alleine, oder von verschiedenen auch kombinierten Elementen des Antriebsstranges interessant bzw. für Forschung und Entwicklung wichtig zu kennen.

Von besonderer Bedeutung ist beispielsweise die Kenntnis der Trägheitsmomente für die Auslegung der Verbindungswelle zwischen einem zu prüfenden Verbrennungsmotor und dem Prüfstand und für die Parametrierung der Prüfstand- bzw. Regelkreise. Fehlerhaft angenommene Trägheitsmomente können in diesem Zusammenhang zu schlechtem Steuer- und Regelverhalten des Prüfstandes bzw. sogar zu Betriebsstörungen durch Bruch der Welle infolge dynamischer Überlastung führen. Auch bei z.B. großen Schiffsmotoren ist die Kenntnis der Trägheitsmomente wichtig, da insbesondere die elastische Lagerung des Motors für die beim Startvorgang auftretenden Reaktionsmomente des Motors ausgelegt werden muß.

Aus der EP-A-434.665 oder der US-A-3 905 223 ist im genannten Zusammenhang beispielsweise bekannt, aus einer Messung der Drehbeschleunigung mit und ohne bekanntes Zusatz-Trägheitsmoment das unbekannte Trägheitsmoment zu $I_o = I_1 \cdot \dot{w}_1/(\dot{w}_o - \dot{w}_1)$ zu bestimmen. In der US-A-3 905 233 geschieht die Messung während einer positiven oder negativen Beschleunigungsphase.

Um ohne bekanntes Zusatz-Trägheitsmoment auszukommen wird als maßgeblicher Zusammenhang für die Trägheitsmomentermittlung das bekannte Newton'sche Gesetz (Kraft = Masse x Beschleunigung) für die Drehbewegung herangezogen. Das Trägheitsmoment I kann demnach als Quotient aus den meßbaren Größen Drehmoment M [Nm] und Drehbeschleunigung $\dot{n}$ [min$^{-1}$/sec] bestimmt werden zu $I = M \cdot (30/\pi\dot{n})$, wobei zur Elimination der überlagerten Drehschwingungen und Drehungleichförmigkeiten bedarfsweise über einige Drehperioden gemittelt werden kann. Dieser einfache Zusammenhang gilt aber nur für den absolut verlustfreien Fall. Zur Berücksichtigung der von verschiedenen Ursachen bestimmten Verluste muß das gemessene bzw. sich äußernde bzw. irgendwie feststellbare Drehmoment $M_M$ um das gerade wirksame Verlustmoment $M_V$ (im einfachsten Falle Reibmoment $M_R$) korrigiert werden zu $M = M_M + M_V$.

Nach dem in diesem Zusammenhang bekannten Stande der Technik wird das Reibmoment bzw. die Reibleistung beispielsweise am Motorenprüfstand z.B. im Schleppbetrieb bei jeweils konstanter Drehzahl oder im Auslauf mit unterschiedlichen Schwungmassen ermittelt. Als Reibkennlinie bezeichnet man in diesem Zusammenhang dann die Drehzahlabhängigkeit des so ermittelten Reibmomentes. Das Reibmoment wird bei diesen bekannten Verfahren im allgemeinen zwar drehzahlabhängig, aber dafür für die Dauer der Messung im wesentlichen konstant angenommen. Da es aber von vielen verschiedenen Einflußgrößen, z.B. von der sich im allgemeinen während der Messung ändernden Öltemperatur, abhängig ist, bringen derartige Verfahren und ihre Anwendung bei der Bestimmung des Trägheitsmoments große Fehler mit sich.

Im genannten Zusammenhang erwähnenswert ist beispielsweise die EP-A-199.431, gemäß welcher das momentane Reibmoment z.B. aus dem gemessenen (indizierten) Zylinderdruck und dem Drehgeschwindigkeitsverlauf bestimmt werden kann, wobei das oszilierende und das rotierende Trägheitsmoment als bekannt vorausgesetzt werden. Eine Umkehrung dieses Verfahrens zur Bestimmung des Trägheitsmomentes selbst ist allerdings nicht ohne weiteres möglich. Weiters ist beispielsweise aus der EP-A-476.588 bekannt, im Fall des praktisch reibungslos laufenden Elektromotors das Trägheitsmoment I aus einer Beschleunigungsphase (positiv oder negativ) durch Integration des gemessenen Drehmoments M und Division durch den Drehgeschwindigkeitsunterschied $\Delta w$ zu bestimmen gemäß $I = \int M \, dt/\Delta w$.

Aufgabe der Erfindung ist es, ein Verfahren der eingangs genannten Art so zu verbessern, daß das Trägheitsmoment des Prüflings weitgehend selbsttätig bestimmt werden kann, ohne daß dafür zusätzliche Fehler verursachende Abschätzungen oder Vereinfachungen vorgenommen werden müßten bzw. ohne daß beispielsweise an einem bekannten Motorenprüfstand zusätzliche aufwendige Vorkehrungen getroffen werden müßten.

Diese Aufgabe wird bei einem Verfahren der eingangs genannten Art gemäß der vorliegenden Erfindung dadurch gelöst, daß sowohl $M_M$ als auch $\dot{n}$ bei ansonsten gleichbleibenden Betriebsbedingungen des zu untersuchenden Elementes (Prüflings) einerseits in einer Hochlaufphase mit positiver Drehbeschleunigung und andererseits in einer Auslaufphase mit negativer Drehbeschleunigung bestimmt werden und daß zur Eliminierung des Verlustmomentes und anderer Störgrößen jeweils die drehzahlmäßig einander entsprechenden, $M_M$ und $\dot{n}$ repräsentierenden Werte

von Hochlaufphase und Auslaufphase voneinander subtrahiert und die erhaltenen Differenzwerte zur Trägheitsmomentbestimmung herangezogen werden.

Durch die Kombination von je zwei Meßwerten bei derselben Drehzahl scheint das Verlustmoment nirgends explizit auf und muß daher nicht, wie bei den bekannten Verfahren, eigens bestimmt werden, um das während eines Beschleunigungsversuchs gemessene Drehmoment korrigieren zu können. Dadurch ergibt sich die Möglichkeit, die gesamte Messung innerhalb kurzer Zeit durchzuführen (einige Sekunden), mit dem Vorteil, daß Einflußgrößen wie die Öltemperatur zu vernachlässigen sind, die bei den bekannten Verfahren das Ergebnis verfälschen können. Weiters läßt sich dieses Verfahren gegenüber den bekannten Verfahren besser automatisieren, weil es in einem Durchlauf alle notwendigen Messungen durchführt, während nach dem Stand der Technik zumindest zwei Meßphasen benötigt werden (Aufnahme der Reibkennlinie, Beschleunigungsversuch) bzw. sogar bauliche Änderungen zwischen den Messungen vorzunehmen sind (Montage der Zusatzträgheiten).

Bevorzugt werden lineare Drehzahlrampen gleicher Dauer - und damit betragsmäßig gleicher Drehbeschleunigung - zwischen einer unteren ($n_u$) und einer oberen Drehzahlschranke ($n_o$). Bestimmt und ausgewertet wird der Verlauf der Drehzahl und des Drehmoments über der Zeit. Bei einer Drehwinkel-bezogenen Datenerfassung müssen wie üblich die Beziehungen zwischen Zeit und Drehwinkel angewendet werden.

Die Eliminierung des Reibmomentes bei der Bestimmung des Trägheitsmomentes kann jetzt so erfolgen, daß aus der (oder den) Hochlaufkurve(n) und der (oder den) Auslaufkurve(n) die Meßpunkte jeweils gleicher Drehzahl ausgewertet und z.B. gemittelt werden.

$$I = 15/\pi \ (M_{M+} - M_{M-})/|\dot{n}|$$

Bevorzugt erfolgt die Eliminierung des Verlustmoments bzw. Reibmomentes bei der Bestimmung des Trägheitsmoments aber so, daß die zeitlichen Integrale der im kontrollierten Hochlauf und Auslauf gemessenen Drehmomentverläufe gebildet werden und die so erhaltenen mittleren Drehimpulse ausgewertet werden.

$$I = 15/\pi \ (\textstyle\int M_{M+} \ dt - \int M_{M-} \ dt)/(n_o - n_u)$$

Zur Vermeidung des Einflußes von Einschwingvorgängen zu Beginn und am Ende jeder Drehzahlrampe, ist es vorteilhaft, wenn die Integrale nicht von Anfang bis Ende jedes kontrollierten Hochlaufs oder Auslaufs gebildet werden, sondern nur in einem dazwischen liegenden Zeitintervall. Dieses Zeitintervall kann durch vorgegebene Zeitwerte oder, bevorzugterweise, durch vorgegebene Drehzahlschwellen definiert sein.

Zur Durchführung des Verfahrens bei Verbrennungsmotoren ist ein Prüfstand zur Kontrolle der Drehzahlrampen und zur Messung von Drehzahl und Drehmoment, bzw. Leistung, vorteilhaft. Es läßt sich anwenden bei Verbrennungsmotoren im gefeuerten Betrieb, bevorzugterweise aber auch im ausschließlich geschleppten Betrieb.

Das ermittelte Trägheitsmoment I setzt sich natürlich aus dem Trägheitsmoment $I_x$ des Prüflings, dem Trägheitsmoment $I_o$ des Prüfstandes und dem Trägheitsmoment $I_W$ der Verbindungswelle zusammen. Während $I_W$ i.A. vom Hersteller der Welle angegeben wird oder mit bekannten Methoden der Maschinendynamik bestimmt werden kann, läßt sich das Trägheitsmoment $I_o$ des Prüfstands ohne Prüfling und Verbindungswelle auch nach demselben Verfahren bestimmen wie das gesamte Trägheitsmoment I. Als Endergebnis erhält man daher:

$$I_x = I - I_W - I_o$$

Es hat sich gezeigt, daß es für bestimmte Verbrennungsmotoren und Prüfstände optimale Drehzahlrampen gibt, bei denen der Fehler im Trägheitsmoment ein Minimum wird. Um eine solche optimale Rampe bei Vorgabe der zulässigen oberen und unteren Drehzahl herauszufinden, wird vorgeschlagen, einerseits eine vom Prüfstand und seinen mechanischen, elektrischen, meßtechnischen und regelungstechnischen Einrichtungen abhängige kürzeste Rampendauer zu ermitteln, bei der die Bestimmung des Eigenträgheitsmoments des Prüfstandes noch innerhalb akzeptabler Fehlergrenzen liegt, und andererseits die auch vom Prüfling und der Verbindungswelle abhängige kürzeste Rampendauer zu ermitteln, bei der keine Überschreitung der zulässigen mechanischen und meßtechnischen Grenzwerte auftritt. Die jeweils längere der beiden so ermittelten kürzesten Rampendauern ist auch die optimale.

Zusätzlich ist zu beachten, daß die Verweilzeit bei hohen Drehzahlen prinzipiell möglichst kurz zu halten ist.

Das erfindungsgemäße Verfahren kann andererseits sinngemäß natürlich auch zur Bestimmung der Verlustmomente bzw. der Reibmomente oder der Reibleistung verwendet werden. Dazu müssen die Drehmomente M, bzw. Drehimpulse $\int M \ dt$, von Hochlauf und Auslauf nicht subtrahiert sondern addiert werden, sodaß der Einfluß der trägen Massen eliminiert wird. Das Verfahren nach der Erfindung ist wie beschrieben nicht auf die Verwendung an Verbrennungsmotoren eingeschränkt und auf verschiedensten Prüfständen bzw. diagnostischen Prüfeinrichtungen einsetzbar, auch dort, wo z.B. nur ein Getriebe ohne Motor oder ein Hybridantrieb mit einem Elektromotor untersucht werden soll. Es läßt sich wie beschrieben nicht nur das Reibmoment, sondern auch gewisse Störgrößen der Meßkette, z.B. ein DAC-Offset, eliminieren, was bei der Trägheitsmomentbestimmung sehr vorteilhaft ist.

Dem Fachmann ist aus den obigen Ausführungen klar, daß das dynamische Reibmoment durch entsprechende Anwendung dieses Verfahrens natürlich auch einfach ermittelt werden kann, wenn umgekehrt das Trägheitsmoment bereits genau bekannt ist. Die genaue Kenntnis des Trägheitsmomentes ist beispielsweise auch im Zusammenhang mit der dynamischen Leistungsmessung an Verbrennungsmotoren bzw. gesamten Antriebssträngen von Fahrzeugen in Werkstätten erforderlich.

Der Vollständigkeit halber ist hier auch darauf hinzuweisen, daß es für die Zwecke der Durchführung des Verfahrens nach der Erfindung unwesentlich ist, ob die Drehmomente, Drehzahlen und Drehbeschleunigungen unmittelbar gemessen werden oder aber durch Vorgabe bzw. Einstellung bekannt sind; auch sind natürlich auch Kombinationen bekannter bzw. eingestellter Werte mit gemessenen Werten oder die indirekte Bestimmung aus sonstigen am Prüfstand bekannten Werten möglich.

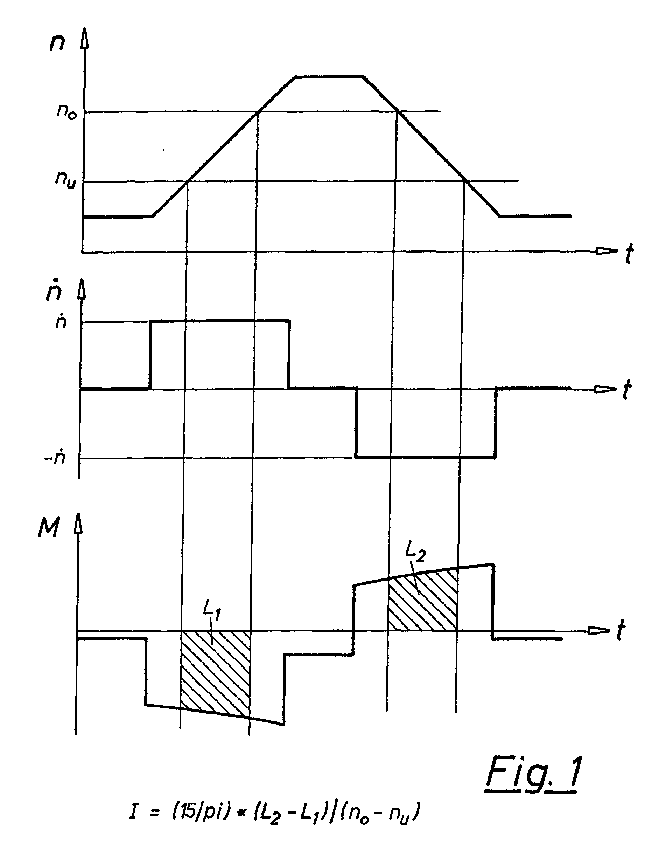

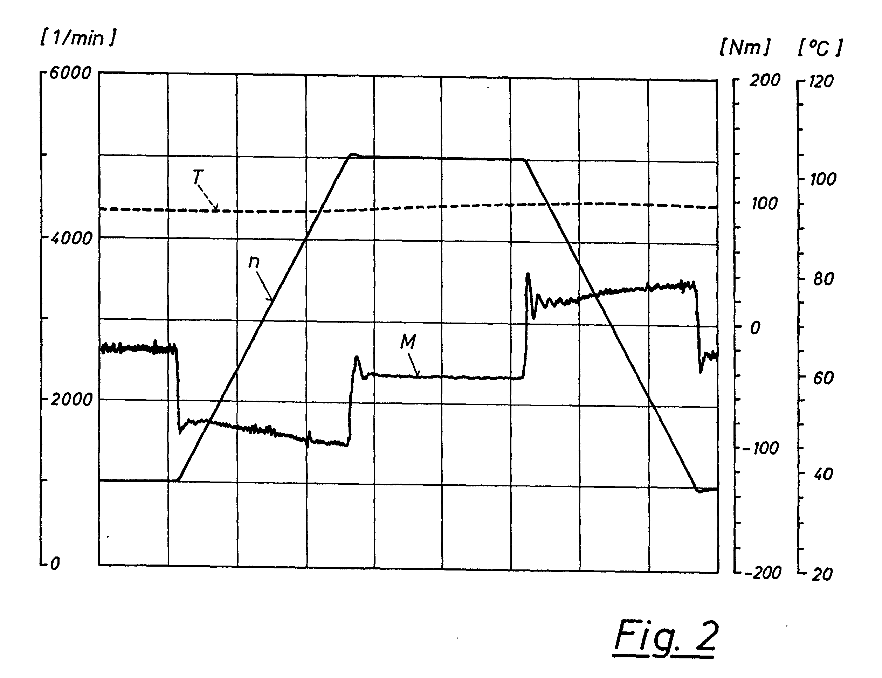

In den zur Verdeutlichung des erfindungsgemäßen Verfahrens beigeschlossenen Zeichnungen zeigt Fig. 1 die idealisierten Verläufe von Drehzahl n, Drehbeschleunigung ṅ und Drehmoment M über der Zeit t, wenn an einem Prüfstand für den zu prüfenden Verbrennungsmotor kontrollierte Drehzahlrampen gefahren werden. Fig. 2 zeigt entsprechend typische gemessene Verläufe von Drehzahl n, Drehmoment M und Öltemperatur T über der Zeit t.

Fig. 1 dient der Erläuterung einer Variante des erfindungsgemäßen Verfahrens. Der Drehmomentverlauf entspricht einem Prüfling mit einem Verlustmoment, das mit der Drehzahl überproportional ansteigt. Die Flächen $L_1$ (negativ) und $L_2$ stellen die Integrale über das Drehmoment, während die Drehzahl zwischen $n_u$ und $n_o$ liegt, dar. Die beiden Flächen ergänzen sich zum Zweifachen der Drehimpulsänderung, die die rotierenden Teile erfahren, wenn sie von $n_u$ nach $n_o$ beschleunigt werden. Diese Gesamtfläche ist unabhängig vom Verlustmoment des Prüflings.

Fig. 2 zeigt am Motorprüfstand gemessene Signalverläufe. Deutlich sieht man die Einschwingvorgänge von Drehmoment und Drehzahl, die die Genauigkeit des ermittelten Trägheitsmoments beeinträchtigen können und daher hier nicht ausgewertet werden. In diesem Beispiel wurden die Intervalle zwischen 2000 min$^{-1}$ und 4000 min$^{-1}$ berücksichtigt ($n_u$ = 2000 min$^{-1}$, $n_o$ = 4000 min$^{-1}$). Man sieht außerdem den Anstieg des Verlustmoments mit der Drehzahl und die relativ große Änderung der Öltemperatur während der Wartezeit von 5 s bei 5000 min$^{-1}$. Diese Wartezeit ist für die Durchführung des Verfahrens natürlich nicht sinnvoll und dient hier nur zur Verdeutlichung der Änderung der Betriebsbedingungen des Verbrennungsmotors. Der Einfluß dieser Änderung wirkt sich im Ergebnis für das Trägheitsmoment aus. Daher soll der Versuch in möglichst kurzer Zeit durchgeführt werden.

Zur weiteren Verdeutlichung folgt noch eine Zusammenstellung der im Zusammenhang mit dem erfindungsgemäßen Verfahren wesentlichen mathematischen Bestimmungsgleichungen.

| | |
|---|---|
| Drehzahl: | n [min$^{-1}$] (mittlere Drehgeschwindigkeit) |
| Drehbeschleunigung: | a [min$^{-1}$/sec] (Drehzahländerung pro Sekunde) |
| Gesamt-Aufbau = | Prüfling (P) + Welle (W) + Belastungsmaschine (B) |
| Gesamt-Trägheitsmoment: | $I = I_P + I_W + I_B$ |
| Drehmoment-Störgrößen: | $M_S(n) = M_1(n) + M_2$ |
| Drehmoment (Hochlauf): | $M_+(n) = (\pi/30) \cdot I \cdot a_+(n) + M_S(n)$ |
| Drehmoment (Auslauf): | $M_-(n) = (\pi/30) \cdot I \cdot a_-(n) + M_S(n)$ |

Variante A:

| | |
|---|---|
| Für 1 Wertepaar bei n: | $I_n = (30/\pi) \cdot [M_+(n) - M_-(n)]/[a_+(n) - a_-(n)]$ |
| Falls: | $a_+(n) = -a_-(n) = a(n)$, wobei evtl. a(n) = a = konst., |
| dann: | $I_n = (15/\pi)[M_+(n) - M_-(n)]/a(n)$ |
| Mittelung: | $I = (I_{n1} + I_{n2} + ...)/$Anzahl |
| Ergebnis: | $I_P = I - I_W - I_B$ |

Variante B:

Drehimpuls (Hochlauf):

$$L_+ = \int_{t_+(n_u)}^{t_+(n_o)} M_+(n)\,dt = (\pi/30) \cdot I \cdot (n_o - n_u) + L_{s+}$$

Drehimpuls (Auslauf):

$$L_- = \int_{t_-(n_o)}^{t_-(n_u)} M_-(n)\,dt = (\pi/30) \cdot I \cdot (n_u - n_o) + L_{s-}$$

Falls:   $a_+(n) = -a_-(n) = a(n)$, wobei evtl. $a(n) = a = $ konst.,
dann:   $L_{s+} = L_{s-}$
und:   $1 = (15/\pi) \cdot (L_+ - L_-)/(n_o - n_u)$
Ergebnis:   $I_P = I - I_W - I_B$

**Patentansprüche**

1.  Verfahren zur Bestimmung des Trägheitsmomentes zumindest eines Elementes eines Antriebsstranges eines Fahrzeuges, insbesonders eines Verbrennungsmotors auf einem Prüfstand, wobei das sich äußernde Drehmoment $M_M$ um das gerade wirksame Verlustmoment $M_V$ zu $M = M_M + M_V$ korrigiert und aus dem korrigierten Drehmoment M und der Drehbeschleunigung $\dot{n}$, bzw. äquivalenten Größen, das Trägheitsmoment $I = M \cdot (30/\pi\dot{n})$ bestimmt wird, **dadurch gekennzeichnet, daß** sowohl $M_M$ als auch $\dot{n}$ bei ansonsten gleichbleibenden Betriebsbedingungen des zu untersuchenden Elementes einerseits in einer Hochlaufphase mit positiver Drehbeschleunigung und andererseits in einer Auslaufphase mit negativer Drehbeschleunigung bestimmt werden und daß zur Eliminierung des Verlustmomentes und anderer Störgrößen jeweils die drehzahlmäßig einander entsprechenden, $M_M$ und $\dot{n}$ repräsentierenden Werte von Hochlaufphase und Auslaufphase voneinander subtrahiert und die erhaltenen Differenzwerte zur Trägheitsmomentbestimmung herangezogen werden.

2.  Verfahren nach Anspruch 1, **dadurch gekennzeichnet, daß** die Drehbeschleunigungen in Hochlauf- und Auslaufphase jeweils bei gleichen Drehzahlen betragsmäßig gleich groß gehalten werden.

3.  Verfahren nach Anspruch 2, **dadurch gekennzeichnet, daß** Hochlaufphase und Auslaufphase als Drehzahlrampen mit gleichem vorgegebenem Betrag der Drehbeschleunigung ausgeführt werden.

4.  Verfahren nach einem der Ansprüche 1 bis 3, **dadurch gekennzeichnet, daß** als repräsentierende Werte für $M_M$ und $\dot{n}$ von Hochlauf- und Auslaufphase zumindest ein bei jeweils gleicher Drehzahl n bestimmtes Wertepaar verwendet wird und daß bei der Bestimmung von I die resultierende Differenz bei $M_M$ durch die resultierende Differenz bei $\dot{n}$ dividiert wird.

5.  Verfahren nach Anspruch 2 oder 3, **dadurch gekennzeichnet, daß** jeweils über die Hochlauf- und Auslaufphase zeitliche Integrale für $M_M$ als repräsentierende Werte gebildet und daß bei der Bestimmung von I diese Werte durch die Differenz der jeweiligen Grenzdrehzahlen dividiert werden.

6.  Verfahren nach Anspruch 5, **dadurch gekennzeichnet, daß** die Integrationsdauer jeweils durch das Passieren vorgegebener Grenzdrehzahlen festgelegt wird und daß bei der Bestimmung von I durch die Differenz dieser Grenzdrehzahlen dividiert wird.

7.  Verfahren nach einem oder mehreren der Ansprüche 1 bis 6, zur Bestimmung des Trägheitsmomentes eines mittels einer Verbindungswelle mit einem Prüfstand verbundenen Verbrennungsmotors, **dadurch gekennzeich-**

**net, daß** das gesuchte Trägheitsmoment $I_x$ des Verbrennungsmotors aus dem ermittelten Trägheitsmoment I nach $I_x = I - I_w - I_0$ bestimmt wird, wobei das Trägheitsmoment $I_w$ der Verbindungswelle bekannt oder mit bekannten Methoden der Maschinendynamik bestimmbar ist und das Trägheitsmoment $I_0$ des Prüfstandes ohne Verbrennungsmotor und Verbindungswelle ebenso wie das Trägheitsmoment des Verbrennungsmotors bestimmt wird.

8. Verfahren nach Anspruch 7, **dadurch gekennzeichnet, daß** unter Vorgabe einer oberen und unteren Drehzahl einerseits eine vom Prüfstand abhängige kürzeste Rampendauer einer linearen Drehzahlrampe, bei der die Bestimmung des Trägheitsmomentes $I_0$ des Prüfstandes innerhalb vorgegebener Fehlergrenzen liegt, und andererseits eine auch von dem zu prüfenden Verbrennungsmotor und der Verbindungswelle abhängige kürzeste Rampendauer, bei der keine Überschreitung der zulässigen mechanischen und meßtechnischen Grenzwerte auftritt, ermittelt werden und daß für eine optimale lineare Drehzahlrampe die jeweils längere dieser Rampendauern verwendet wird.

**Claims**

1. A method for determining the moment of inertia of at least one element of a drive train of a vehicle, in particular of an internal combustion engine on a test stand, whereby the torque $M_M$ is corrected by the effective torque $M_V$ to $M = M_M + M_V$ and the moment of inertia $I = M \cdot (30/\pi\dot{n})$ is determined from the corrected torque M and the angular acceleration $\dot{n}$ or equivalent values, **characterised in that** both $M_M$ and $\dot{n}$ are determined under otherwise identical operating conditions of the element being examined on the one hand in a run-up phase with positive angular acceleration and on the other hand in a run-out phase with negative angular acceleration, and that to eliminate the moment of loss and other disturbance variables in each case the values of run-in phase and run-out phase corresponding to one another and representing $M_M$ and $\dot{n}$ are subtracted from one another, and **in that** the resulting differential values are enlisted for determining moment of inertia.

2. The method as claimed in Claim 1, **characterised in that** the angular acceleration are maintained identical in terms of total in the run-up and run-out phase at the same speeds.

3. The method as claimed in Claim 2, **characterised in that** run-up phase and run-out phase are configured as speed ramps with the same preset degree of angular acceleration.

4. The method as claimed in any one of Claims 1 to 3, **characterised in that** at least one value pair determined at the same speed n is used as representative values $M_M$ and $\dot{n}$ of run-up and run-out phase and that the difference at $M_M$ resulting from determining I is divided by the resulting difference $\dot{n}$.

5. The method as claimed in Claim 2 or 3, **characterised in that** temporal integrals for $M_M$ are formed in each case as representative values by the run-up and run-out phase, and that these values are divided by the difference of the respective ceiling speeds from determining I.

6. The method as claimed in Claim 5, **characterised in that** the integration duration is established in each case by passing preset ceiling speeds and that it is divided by the difference of these ceiling speeds from determining I.

7. The method as claimed in any one or more of Claims 1 to 6 for determining the moment of inertia of an internal combustion engine connected to a test stand by means of a connecting shaft, **characterised in that** the desired moment of inertia $I_x$ of the internal combustion engine is determined from the determined moment of inertia I according to $I_x = I - I_w - I_o$, whereby the moment of inertia $I_w$ of the connecting shaft is known or can be determined by known methods of machine dynamics and the moment of inertia $I_o$ of the test stand is determined without an internal combustion engine and connecting shaft similarly to the moment of inertia of the internal combustion engine.

8. The method as claimed in Claim 7, **characterised in that** by presetting an upper and a lower speed on the one hand the shortest ramp duration of a linear speed ramp dependent on the test stand is determined, wherein determining the moment of inertia $I_o$ of the test stand is within preset error limits, and on the other hand the shortest ramp duration also dependent on the internal combustion engine to be tested and the connecting shaft is determined, wherein the permissible mechanical and metrological limit values are not exceeded, and **in that** the respectively longer of these ramp durations is used for an optimal linear speed ramp.

**Revendications**

1.  Procédé pour déterminer le moment d'inertie d'au moins un élément d'une transmission d'un véhicule, notamment d'un moteur à combustion sur un banc d'essai, dans lequel le couple de rotation $M_M$ se corrige du couple de perte effectif $M_V$ par $M = M_M + M_V$, et le moment d'inertie $I = M.(30/\pi\dot{n})$ est déterminé à partir du couple de rotation corrigé M et de l'accélération angulaire $\dot{n}$ ou de grandeurs équivalentes, **caractérisé en ce qu'**aussi bien $M_M$ que $\dot{n}$ sont déterminés, les conditions de fonctionnement de l'élément à examiner étant par ailleurs inchangées, d'une part pendant une phase d'accélération avec accélération angulaire positive et d'autre part pendant une phase de décélération avec accélération angulaire négative, et **en ce que** pour éliminer le couple de perte et d'autres grandeurs perturbatrices, on soustrait respectivement l'une de l'autre les valeurs de la phase d'accélération et de la phase de décélération représentant $M_M$ et $\dot{n}$ correspondant l'une à l'autre au niveau de la vitesse de rotation, et on utilise les valeurs de différence obtenues pour déterminer le moment d'inertie.

2.  Procédé selon la revendication 1, caractérisé en ce les accélérations angulaires dans les phases d'accélération et de décélération respectivement avec les mêmes vitesses de rotation sont effectuées aux mêmes valeurs.

3.  Procédé selon la revendication 2, **caractérisé en ce que** la phase d'accélération et la phase de décélération sont effectuées comme des rampes de vitesse de rotation avec la même valeur prédéterminée de l'accélération angulaire.

4.  Procédé selon l'une quelconque des revendications 1 à 3, **caractérisé en ce que** comme valeurs représentatives de $M_M$ et $\dot{n}$ des phases d'accélération et de décélération on utilise au moins une paire de valeurs déterminée à respectivement la même vitesse de rotation n, et **en ce que** lors de la détermination de I, la différence en résultant pour $M_M$ est divisée par la différence en résultant pour $\dot{n}$.

5.  Procédé selon la revendication 2 ou 3, **caractérisé en ce que** des intégrales de temps pour $M_M$ sont calculées comme valeurs représentatives respectivement pendant les phases d'accélération et de décélération, et **en ce que** lors de la détermination de I, ces valeurs sont divisées par la différence des valeurs de rotation limites respectives.

6.  Procédé selon la revendication 5, **caractérisé en ce que** la durée d'intégration est respectivement définie par le passage de vitesses de rotation limites prédéterminées, et **en ce que** lors de la détermination de I elle est divisée par la différence de ces vitesses de rotation limites.

7.  Procédé selon l'une quelconque ou plusieurs des revendications 1 à 6 pour déterminer le moment d'inertie d'un moteur à combustion relié à un banc d'essai à l'aide d'un arbre de liaison, **caractérisé en ce que** le moment d'inertie $I_x$ recherché du moteur à combustion est déterminé à partir du moment d'inertie I déterminé selon $I_x = I - I_w - I_o$, dans lequel le moment d'inertie $I_w$ de l'arbre de liaison est connu ou peut être déterminé à l'aide de méthodes connues de la dynamique des machines, et **en ce que** le moment d'inertie $I_o$ du banc d'essai sans moteur à combustion et arbre de liaison est déterminé de la même manière que le moment d'inertie du moteur à combustion.

8.  Procédé selon la revendication 7, **caractérisé en ce qu'**en spécifiant des vitesses de rotation supérieure et inférieure on détermine d'une part une durée de rampe la plus courte d'une rampe de vitesse de rotation linéaire en fonction du banc d'essai, où la détermination du moment d'inertie $I_o$ du banc d'essai se situe à l'intérieur de limites d'erreur prédéterminées, et d'autre part une durée de rampe la plus courte également fonction du moteur à combustion à examiner et de l'arbre de liaison, où aucun dépassement des valeurs limites mécaniques et de mesure admissibles ne se produit, et **en ce que** pour une rampe de vitesse de rotation linéaire optimale on utilise la durée de rampe respectivement la plus longue.

_Fig. 1_

$$I = (15/pi) * (L_2 - L_1)/(n_o - n_u)$$

Fig. 2

EP 0 704 689 B1